Europäisches Patentamt

European Patent Office

Office européen des brevets

(11) Veröffentlichungsnummer: **0 464 304 B1**

(12) **EUROPÄISCHE PATENTSCHRIFT**

(45) Veröffentlichungstag der Patentschrift: 05.04.95

(51) Int. Cl.6: **C09D 11/00**, C09B 57/00

(21) Anmeldenummer: **91101246.6**

(22) Anmeldetag: **31.01.91**

(54) **Markierungsflüssigkeit.**

(30) Priorität: **30.06.90 DE 4020901**

(43) Veröffentlichungstag der Anmeldung:
**08.01.92 Patentblatt 92/02**

(45) Bekanntmachung des Hinweises auf die
Patenterteilung:
**05.04.95 Patentblatt 95/14**

(84) Benannte Vertragsstaaten:
**AT CH DE ES FR GB IT LI NL SE**

(56) Entgegenhaltungen:
**DE-B- 2 315 680**

**WORLD PATENTS INDEX Derwent Publications Ltd., London, GB; AN 78-81418A& JP-
A-53 114 993 (PENTEL KK) 6. Oktober 1978**

**PATENT ABSTRACTS OF JAPAN vol. 13, no.
49 (C-565)(3397) 3. Februar 1989& JP-A-63
245 482 ( PENTEL KK ) 12. Oktober 1988**

(73) Patentinhaber: **Schwan-STABILO Schwanhäusser GmbH & Co.
Maxfeldstrasse 3
D-90409 Nürnberg (DE)**

(72) Erfinder: **Horvat, Ivan
Else-Model-Strasse 19
W-8832 Weissenburg (DE)**
Erfinder: **Kramp, Peter, Dr.
Spittlertorgraben 29
W-8500 Nürnberg (DE)**
Erfinder: **Onczul, Erhard
von Pappenheimerstrasse 5
W-8550 Forchheim (DE)**

(74) Vertreter: **LOUIS, PÖHLAU, LOHRENTZ & SE-
GETH
Postfach 3055
D-90014 Nürnberg (DE)**

**Beschreibung**

Die Erfindung betrifft eine Markierungsflüssigkeit, die Hydroxypyrentrisulfonsäure (Pyranin; C.I. solvent green 7 No. 59040) als Fluoreszenzfarbstoff bzw. Tagesleuchtfarbe im wässrigen alkalischen Medium enthält. Eine solche Flüssigkeit ist in der DE-PS 23 15 680 beschrieben. Mit ihr können Schreibtexte durch Überstreichen deutlich hervorgehoben bzw. optisch von anderen Texten abgesetzt (markiert) werden.

Die in dem vorerwähnten Patent beschriebene Flüssigkeit besitzt im Vergleich mit anderen Markierungsflüssigkeiten den Vorteil, dass der mit ihr auf einer Unterlage erzeugte Abstrich aufgrund des Tagesleuchtfarben-Charakters des Pyranins sehr farbintensiv ist und die Farbwirkung spontan nach dem Auftrag eintritt.

Bei manchen Verwendungen der bekannten Markierungsflüssigkeiten auf Pyraninbasis ergeben sich jedoch gewisse Nachteile. Wird die pyraninhaltige Flüssigkeit beispielsweise auf Durchschläge bestimmter "kohlepapierfreier" Durchschreibesätze aufgebracht, so ist ein Ausbleichen oder sogar ein vollständiges Löschen der zu markierenden Schrift zu beobachten; beim Auftragen auf thermosensitive Papiere, z.B. sog. "Fax"-Papier, ergibt sich ein "Verdunkeln" der Markierungsfläche. Solche unerwünschten Wirkungen, die mit einem Unleserlichwerden des mit der Markierungsflüssigkeit überstrichenden Schreibtextes verbunden sind, können auch bei Papieren mit anderen Beschichtungen auftreten.

In der DE-PS 24 41 823 wird zur Verbesserung der Lichtbeständigkeit von als Tagesleuchtfarben wirkenden Fluoreszenzfarbstoffen, auch solche die Pyranin enthalten, vorgeschlagen, den Farbstoffen bzw. den diese enthaltenden Markierungsflüssigkeiten Reduktionsmittel zuzusetzen. Dadurch wird die Lichtbeständigkeit zwar in gewissem Umfange verbessert. Jedoch werden die eingangs erwähnten Nachteile (Ausbleichen bzw. Löschen der Schrift, Schwärzen bzw. Verdunkeln der Markierungsfläche) nicht nur nicht eliminiert, sondern unter Umständen je nach Papiertyp sogar noch verstärkt.

Mit der vorliegenden Erfindung sollen die bekannten pyraninhaltigen Markierungsflüssigkeiten so weiterentwickelt werden, dass sie universell, also auch in den vorerwähnten, bisher mit Nachteilen behafteten Fällen verwendbar sind, wobei gleichzeitig auch noch die Lichtbeständigkeit der Farbabstriche verbessert werden soll.

Aus der JP-A-53 114 993 ist die Verwendung eines Polysaccharids (Stärke) in einer pyraninhaltigen Paste mit alkalischem pH-Wert bekannt. Diese Paste soll nach dem Auftragen kurzfristig leuchten, die Farbe soll aber innerhalb kürzester Zeit verschwinden. Dies wird dadurch erreicht, daß unterschiedliche Mengen an verschiedenen Alkali zugegeben werden.

Die JP-A-63 245 482 offenbart die Herstellung von hitzestabilen und nicht radierbaren Tinten, die nicht ausbleichen. Dabei werden fluoreszierende Pigmente, denen neben anderen Bestandteilen auch bis zu 50 Gew.-% Sorbitol und Saccharide zugesetzt werden können, verwendet. Als Pigmente werden Weißpigmente, wie zum Beispiel Zinkoxid, zugegeben, die bei Tageslicht nicht fluoreszieren, sondern erst bei Anregung durch UV- oder Röntgenstrahlung.

Demgegenüber zeichnet sich die erfindungsgemäße pyraninhaltige fluoreszierende Markierungsflüssigkeit, die Hydroxypyrentrisulfonsäure als Fluoreszenzfarbstoff im wässrigen alkalischen Medium enthält, durch eine hervorragende Qualität auf den unterschiedlichsten Papiertypen aus, wobei die Lichtbeständigkeit des Farbanstrichs deutlich verbessert wird und die Nachteile der bekannten Markierungsflüssigkeiten überwunden werden.

Erfindungsgemäß werden diese Eigenschaften durch den Zusatz von Sacchariden erreicht. Überraschenderweise hat sich ergeben, daß bei Verwendung der erfindungsgemäßen Zusammensetzung die Zugabe von Sacchariden, eine hervorragende Qualität auf allen Papiertypen verglichen mit den bekannten Markierungsflüssigkeiten ergibt.

Die erfindungsgemäße Markierungsflüssigkeit auf Basis einer einen im alkalischen Bereich liegenden pH-Wert aufweisenden wässrigen Lösung von Hydroxypyrentrisulfonsäure (Pyranin C.I. solvent green 7 No.59040), ist gekennzeichnet durch den Gehalt von 5 bis 20 Gew.-%, bezogen auf das Gesamtgewicht der Flüssigkeit, an Mono-, Di- oder Trisacchariden, den hiervon durch Reduktion abgeleiteten Polyolen oder Mischungen der genannten Substanzen.

Bei Verwendung der erfindungsgemässen Markierungsflüssigkeit werden die Wirkungen bzw. Vorteile erreicht, die der vorerwähnten Zielsetzung entsprechen. Durch die universelle Verwendbarkeit der erfindungsgemässen Markierungsflüssigkeit erübrigt sich die Bereitstellung mehrerer Markierungsflüssigkeiten unterschiedlicher Zusammensetzung, wodurch Verwechslungen beim Verbraucher ausgeschlossen werden und die Voraussetzung für eine rationelle Lagerhaltung beim Händler geschaffen wird. Es ergeben sich aber auch kostenmässige Vorteile gegenüber der Verwendung pigmenthaltiger Markierungsflüssigkeiten auf Basis eingefärbter Kunststoff-Dispersionen. Im übrigen schont der hohe Anteil an nachwachsenden Rohstoffen bei der erfindungsgemässen Markierungsflüssigkeit die natürlichen Ressourcen (Erdöl).

Für die Zwecke der Erfindung werden schon aus Kostengründen vorzugsweise die natürlich vorkommenden Formen der erwähnten Saccharide eingesetzt. Ihr Gehalt in der Markierungsflüssigkeit kann zwischen 5 und 20 Gew.-%, bezogen auf das Gesamtgewicht der Flüssigkeit, betragen.

Als Beispiele für die erfindungsgemäss in Betracht kommenden Monosaccharide seien genannt: Pentosen, z.B. Xylose; Aldohexosen, z.B. Glucose, Mannose, Galactose; Ketohexosen, z.B. Fructose, Sorbose.

Beispiele für erfindungsgemäss einsetzbare Disaccharide sind:

Saccharose, Lactose, Maltose, Trehalose, Cellobiose. Ein Beispiel für ein erfindungsgemäss verwendbares Trisaccharid ist Raffinose.

Zur Abstimmung der gewünschten Farbwirkung kann die Flüssigkeit noch andere Farbstoffe, vorzugsweise fluoreszierende Farbstoffe, enthalten, wobei diese wasserlöslich sein sollen.

Die Einstellung eines pH-Wertes im Bereich von 8 - 13 fördert den Fluoreszenzeffekt, wobei der pH-Wert vorzugsweise im engeren Bereich von 9 - 10 liegt. Eine Abpufferung speziell mit Trishydroxymethylaminomethan hat sich als vorteilhaft erwiesen, jedoch können durchaus auch weitere Puffersubstanzen, wie z.B. Natriumzitrat, Anwendung finden.

Damit die Haltbarkeit der Markierungsflüssigkeit nicht durch Mikrobenbefall beeinträchtigt wird, sollte ein Konservierungsmittel zugesetzt werden, z.B. ein Isothiazolinon-Derivat.

Weitere die Eigenschaften (z.B. Fliessverhalten und Verlauf sowie Erhöhung der Brillanz) der Markierungsflüssigkeit verbessernde bzw. modifizierende Zusätze sind oberflächenaktive Substanzen (Netzmittel) und/oder wasserlösliche Bindemittel, z.B. ölfreie Alkydharze.

Nachfolgend wird die Zusammensetzung einiger Beispiele für die erfindungsgemässe Markierungsflüssigkeit angegeben.

Beispiel 1 / (GELB-Effekt)

| | |
|---|---|
| Pyranin (Solvent green 7) | 1,6 % |
| Trishydroxymethylaminomethan | 1,0 % |
| Na OH | 0,7 % |
| Isothiazolinon-Derivat | 0,2 % |
| Glucose | 20,0 % |
| Wasser | 76,5 % |

Beispiel 2 / (GRÜN-Effekt)

| | |
|---|---|
| Pyranin | 1,6 % |
| Reactive Green 21 | 0,35 % |
| Trishydroxymethylaminomethan | 1,0 % |
| Na OH | 0,7 % |
| Isothiazolinon-Derivat | 0,25 % |
| Saccharose | 20,00 % |
| Wasser | 76,1 % |

Beispiel 3 / (ORANGE-Effekt)

| | |
|---|---|
| Pyranin | 0,8 % |
| Basic red 1 (10%ige Lösung) | 0,5 % |
| Basic violet 10 (10%ige Lösung) | 0,25 % |
| Trishydroxymethylaminomethan | 0,5 % |
| Natriumzitrat | 4,5 % |
| $Na_2 CO_3$ | 3,5 % |
| ölfreies Alykdharz | 13,0 % |

4

| | |
|---|---|
| Fructose | 10,0 % |
| Isothiazolinon-Derivat | 0,1 % |
| Wasser | 66,85 % |

### Beispiel 4 / (ORANGE-Effekt)

| | |
|---|---|
| Pyranin | 0,8 % |
| Basic red 1 (10%ige Lösung) | 0,5 % |
| Basic violet 10 (10%ige Lösung) | 0,25 % |
| Trishydroxymethylaminomethan | 0,5 % |
| Natriumzitrat | 4,55 % |
| $Na_2 CO_3$ | 3,5 % |
| ölfreies Alkydharz | 13,0 % |
| Galactose | 10,0 % |
| Isothiazolinon-Derivat | 0,1 % |
| Wasser | 66,8 % |

### Beispiel 5 / (GELB-Effekt)

| | |
|---|---|
| Pyranin | 1,7 % |
| Trishydroxymethylaminomethan | 1,0 % |
| Na OH | 0,8 % |
| Isothiazolinon-Derivat | 0,2 % |
| Lactose | 20,0 % |
| Wasser | 76,5 % |

### Beispiel 6 / (GELB-Effekt)

| | |
|---|---|
| Pyranin | 1,8 % |
| Trishydroxymethylaminomethan | 1,0 % |
| $Na_2 CO_3$ | 2,0 % |
| Isothiazolinon-Derivat | 0,2 % |
| Maltose | 20,0 % |
| Wasser | 75,0 % |
| Sek. Na-Alkansulfonat | 1,0 % |

## Beispiel 7 / (GELB-Effekt)

| | |
|---|---|
| Pyranin | 1,9 % |
| Trishydroxymethylaminomethan | 1,5 % |
| $Na_2 CO_3$ | 1,1 % |
| Isothiazolinon-Derivat | 0,2 % |
| Saccharose | 10,0 % |
| Fructose | 5,0 % |
| Sorbitol | 5,0 % |
| Wasser | 75,3 % |

## Beispiel 8 / (GRÜN-Effekt)

| | |
|---|---|
| Pyranin | 1,4 % |
| Reactive green 21 | 0,4 % |
| Trishydroxyaminomethan | 1,0 % |
| Na OH | 1,4 % |
| Lactose | 10,0 % |
| Fructose | 10,0 % |
| Isothiazolinon-Derivat | 0,2 % |
| Wasser | 75,6 % |

## Beispiel 9 / (GELB-Effekt)

| | |
|---|---|
| Pyranin | 1,8 % |
| Trishydroxyaminomethan | 1,0 % |
| $Na_2 CO_3$ | 1,0 % |
| Maltose | 10,0 % |
| Galactose | 10,0 % |
| Isothiazolinon-Derivat | 0,2 % |
| Wasser | 76,0 % |

## Beispiel 10 / (GELB-Effekt)

| | |
|---|---|
| Pyranin | 1,9 % |
| Trishydroxyaminomethan | 1,0 % |
| Na OH | 1,0 % |
| Isothiazolinon-Derivat | 0,2 % |
| Xylose | 20,0 % |
| Wasser | 75,9 % |

## Beispiel 11 / (GELB-Effekt)

| | |
|---|---|
| Pyranin | 1,7 % |
| Trishdydroxyaminomethan | 1,1 % |
| $Na_2 CO_3$ | 1,2 % |
| Isothiazolinon-Derivat | 0,2 % |
| Xylose | 10,0 % |
| Glucose | 10,0 % |
| Wasser | 75,8 % |

## Beispiel 12 / (ORANGE-Effekt)

| | |
|---|---|
| Pyranin | 0,7 % |
| Basic red 1 (10%ige Lösung) | 0,6 % |
| Basic violet 10 (10%ige Lösung) | 0,2 % |
| Trishydroxymethylaminomethan | 0,7 % |
| $Na_2 CO_3$ | 3,5 % |
| Isothiazolinon-Derivat | 0,4 % |
| Raffinose | 15,0 % |
| ölfreies Alkydharz | 13,0 % |
| Wasser | 65,9 % |

## Beispiel 13 / (GRÜN-Effekt)

| | |
|---|---|
| Pyranin | 1,6 % |
| Reactive green 21 | 0,4 % |
| Trishydroxymethylaminomethan | 1,1 % |
| $Na_2 CO_3$ | 0,9 % |
| Isothiazolinon-Derivat | 0,3 % |
| Cellobiose | 10,0 % |
| Sorbitol | 10,0 % |
| Wasser | 75,7 % |

**Patentansprüche**

1. Markierungsflüssigkeit auf der Basis einer einen im alkalischen Bereich liegenden pH-Wert aufweisenden wässrigen Lösung von Hydroxypyrentrisulfonsäure (C.I. solvent green 7 No. 59040),
**gekennzeichnet durch**
einen Gehalt von 5 bis 20 Gew.-%, bezogen auf das Gesamtgewicht der Flüssigkeit, an Mono-, Di- oder Trisacchariden, den hiervon durch Reduktion abgeleiteten Polyolen oder Mischungen der genannten Substanzen.

2. Markierungsflüssigkeit nach Anspruch 1,
**gekennzeichnet durch**
einen Gehalt an Pentosen.

3. Markierungsflüssigkeit nach Anspruch 2,
**gekennzeichnet durch**
einen Gehalt an Xylose.

4. Markierungsflüssigkeit nach Anspruch 1,
**gekennzeichnet durch**
einen Gehalt an Aldohexosen.

5. Markierungsflüssigkeit nach Anspruch 4,
**gekennzeichnet durch**
einen Gehalt an Glucose, Mannose, Galactose.

6. Markierungsflüssigkeit nach Anspruch 1,
**gekennzeichnet durch**
einen Gehalt an Ketohexosen.

7. Markierungsflüssigkeit nach Anspruch 6,
**gekennzeichnet durch**
einen Gehalt an Fructose oder Sorbose.

8. Markierungsflüssigkeit nach Anspruch 1,
**gekennzeichnet durch**
einen Gehalt an Disacchariden.

9. Markierungsflüssigkeit nach Anspruch 8,
**gekennzeichnet durch**
einen Gehalt an Saccharose, Lactose, Maltose, Trehalose oder Cellobiose.

**10.** Markierungsflüssigkeit nach Anspruch 1,
**gekennzeichnet durch**
einen Gehalt an Trisacchariden.

**11.** Markierungsflüssigkeit nach Anspruch 10,
**gekennzeichnet durch**
einen Gehalt an Raffinose.

**12.** Markierungsflüssigkeit nach einem oder mehreren der vorhergehenden Ansprüche,
**gekennzeichnet durch**
den Gehalt an mindestens einem weiteren wasserlöslichen Farbstoff.

**13.** Markierungsflüssigkeit nach Anspruch 12,
**dadurch gekennzeichnet,**
dass der Farbstoff fluoreszierend ist.

**14.** Markierungsflüssigkeit nach Anspruch 13,
**dadurch gekennzeichnet,**
dass der Farbstoff Tagesleuchtfarben-Charakter hat.

**15.** Markierungsflüssigkeit anch einem oder mehreren der vorhergehenden Ansprüche,
**dadurch gekennzeichnet,**
dass die Flüssigkeit auf einem pH-Wert im Bereich von 8 - 13 abgepuffert ist.

**16.** Markierungsflüssigkeit nach Anspruch 15,
**dadurch gekennzeichnet,**
dass die Abpufferung auf einen pH-Wert von 9 - 10 erfolgt.

**17.** Markierungsflüssigkeit nach Anspruch 15,
**gekennzeichnet durch**
einen Gehalt an Trishydroxymethylaminomethan.

**18.** Markierungsflüssigkeit nach einem oder mehreren der vorhergehenden Ansprüche,
**dadurch gekennzeichnet,**
dass die Flüssigkeit ein Konservierungsmittel gegen schädlichen Mikrobenbefall enthält.

**19.** Markierungsflüssigkeit nach Anspruch 18
**gekennzeichnet durch**
einen Gehalt an Isothiazolinon-Derivat.

**20.** Markierungsflüssigkeit nach einem oder mehreren der vorhergehenden Ansprüche,
**gekennzeichnet durch**
den Gehalt an einem wasserlöslichen Bindemittel.

**21.** Markierungsflüssigkeit nach einem oder mehreren der vorhergehenden Ansprüche,
**gekennzeichnet durch**
den Gehalt an Netzmitteln.

**Claims**

**1.** Marking fluid based on an aqueous solution of hydroxypyrenetrisulphonic acid (C.I. Solvent Green 7 No. 59040) having a pH in the alkaline range, characterized by a content of 5 to 20% by weight, relative to the total weight of the fluid, of mono-, di- or trisaccharides, the polyols derived therefrom by reduction or mixtures of the stated substances.

**2.** Marking fluid according to Claim 1, characterized by a content of pentoses.

**3.** Marking fluid according to Claim 2, characterized by a content of xylose.

9

4. Marking fluid according to Claim 1, characterized by a content of aldohexoses.

5. Marking fluid according to Claim 4, characterized by a content of glucose, mannose or galactose.

6. Marking fluid according to Claim 1, characterized by a content of ketohexoses.

7. Marking fluid according to Claim 6, characterized by a content of fructose or sorbose.

8. Marking fluid according to Claim 1, characterized by a content of disaccharides.

9. Marking fluid according to Claim 8, characterized by a content of sucrose, lactose, maltose, trehalose or cellobiose.

10. Marking fluid according to Claim 1, characterized by a content of trisaccharides.

11. Marking fluid according to Claim 10, characterized by a content of raffinose.

12. Marking fluid according to one or more of the preceding claims, characterized by a content of at least one further water-soluble dye.

13. Marking fluid according to Claim 12, characterized in that the dye is fluorescent.

14. Marking fluid according to Claim 13, characterized in that the dye has dayglow character.

15. Marking fluid according to one or more of the preceding claims, characterized in that the fluid is buffered at a pH in the range of 8-13.

16. Marking fluid according to Claim 15, characterized in that the buffering is effected to a pH of 9-10.

17. Marking fluid according to Claim 15, characterized by a content of trishydroxymethylaminomethane.

18. Marking fluid according to one or more of the preceding claims, characterized in that the fluid contains a preservative against attack by harmful microbes.

19. Marking fluid according to Claim 18, characterized by a content of an isothiazolinone derivative.

20. Marking fluid according to one or more of the preceding claims, characterized by a content of a water-soluble binder.

21. Marking fluid according to one or more of the preceding claims, characterized by a content of wetting agents.

**Revendications**

1. Liquide de marquage à base d'une solution aqueuse, présentant un pH situé dans le domaine alcalin, d'acide hydroxypyrènetrisulfonique (C.I. "Solvent Green 7 N° 59 040),
caractérisé en ce qu'il contient une proportion de 5 à 20 % en poids par rapport au poids total du liquide de mono-, di- ou trisaccharides provenant de la réduction des polyols dont ils dérivent ou de mélanges desdites substances.

2. Liquide de marquage selon la revendication 1, caractérisé en ce qu'il contient des pentoses.

3. Liquide de marquage selon la revendication 2, caractérisé en ce qu'il contient du xylose.

4. Liquide de marquage selon la revendication 1, caractérisé en ce qu'il contient des aldohexoses.

5. Liquide de marquage selon la revendication 4, caractérisé en ce qu'il contient du glucose, du mannose ou du galactose.

6.  Liquide de marquage selon la revendication 1, caractérisé en ce qu'il contient des cétohexoses.

7.  Liquide de marquage selon la revendication 6, caractérisé en ce qu'il contient du fructose ou du sorbose.

8.  Liquide de marquage selon la revendication 1, caractérisé en ce qu'il contient des disaccharides.

9.  Liquide de marquage selon la revendication 8, caractérisé en ce qu'il contient du saccharose, du lactose, du maltose, du tréhalose ou de la cellobiose.

10. Liquide de marquage selon la revendication 1, caractérisé en ce qu'il contient des trisaccharides.

11. Liquide de marquage selon la revendication 10, caractérisé en ce qu'il contient du raffinose.

12. Liquide de marquage selon l'une ou plusieurs des revendications précédentes, caractérisé en ce qu'il contient au moins un colorant supplémentaire soluble dans l'eau.

13. Liquide de marquage selon la revendication 12, caractérisé en ce que le colorant est fluorescent.

14. Liquide de marquage selon la revendication 13, caractérisé en ce que le colorant a le caractère d'une couleur lumière du jour.

15. Liquide de marquage selon l'une ou plusieurs des revendications précédentes, caractérisé en ce que le liquide est tamponné à un pH de l'intervalle de 8 - 13.

16. Liquide de marquage selon la revendication 15, caractérisé en ce que le tampon a un pH de 9 - 10.

17. Liquide de marquage selon la revendication 15, caractérisé en ce qu'il contient du trishydroxyméthylaminométhane.

18. Liquide de marquage selon l'une ou plusieurs des revendications précédentes, caractérisé en ce que le liquide contient un agent de conservation vis-à-vis des attaques microbiennes.

19. Liquide de marquage selon la revendication 18, caractérisé en ce qu'il contient un dérivé de l'isothiazoninone.

20. Liquide de marquage selon l'une ou plusieurs des revendications précédentes, caractérisé en ce qu'il contient un liant soluble dans l'eau.

21. Liquide de marquage selon l'une ou plusieurs des revendications précédentes, caractérisé en ce qu'il contient un agent de réticulation.